(19) Europäisches Patentamt
European Patent Office
Office européen des brevets

(11) **EP 4 749 453 A1**

(12) **EUROPEAN PATENT APPLICATION**
published in accordance with Art. 153(4) EPC

(43) Date of publication:
**27.05.2026 Bulletin 2026/22**

(21) Application number: **24857683.7**

(22) Date of filing: **04.03.2024**

(51) International Patent Classification (IPC):
***G06F 9/50*** (2006.01)

(52) Cooperative Patent Classification (CPC):
**G06F 9/50; G06F 12/0866**

(86) International application number:
**PCT/CN2024/079913**

(87) International publication number:
**WO 2025/044128 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.08.2023 CN 202311090908
15.09.2023 CN 202311196479**

(71) Applicant: **Huawei Cloud Computing
Technologies Co., Ltd.
Gui'an New District, Guizhou 550025 (CN)**

(72) Inventor: **ZUO, Pengfei
Guiyang, Guizhou 550025 (CN)**

(74) Representative: **Pfenning, Meinig & Partner mbB
Patent- und Rechtsanwälte
Theresienhöhe 11a
80339 München (DE)**

(54) **CACHE REPLACEMENT METHOD AND DEVICE, AND SYSTEM**

(57) This application provides a cache replacement method, apparatus, and system, and relates to the computer field. A compute node in a distributed system sends a first read operation request to a memory node, to indicate to read access information of a plurality of data objects from the memory node. Then, the compute node separately calculates popularities of the plurality of data objects based on the access information of the plurality of data objects by using a first cache replacement algorithm in a plurality of cache replacement algorithms. Finally, when cache replacement needs to be performed, the compute node sends a cache replacement request to the memory node based on the popularities of the plurality of data objects, to indicate to replace cold data in the plurality of data objects with a data object to be inserted into the memory node. In this way, the compute node executes the cache replacement algorithm based on global access information, thereby implementing accurate cache replacement in the distributed system of a disaggregated memory architecture.

FIG. 2

## Description

This application claims priorities to Chinese Patent Application No. 202311090908.1, filed with the China National Intellectual Property Administration on August 28, 2023, and entitled "CACHE REPLACEMENT METHOD, APPARATUS, AND ANOTHER DEVICE", and to Chinese Patent Application No. 202311196479.6, filed with the China National Intellectual Property Administration on September 15, 2023, and entitled "CACHE REPLACEMENT METHOD, APPARATUS, AND SYSTEM", both of which are incorporated herein by reference in their entireties.

## TECHNICAL FIELD

This application relates to the computer field, and in particular, to a cache replacement method, apparatus, and system.

## BACKGROUND

A distributed system (distributed system) generally includes a plurality of compute nodes (compute node, CN) and a plurality of memory nodes (memory node, MN), and the compute node is configured to access and operate a data object cached in the memory node. When cache replacement needs to be performed on cache data stored in the memory node, the memory node performs cache replacement on the locally stored cache data by using a cache replacement algorithm.

However, in a distributed system of a disaggregated memory (disaggregated memory) architecture, a compute node usually directly accesses cache data stored in a memory node, and a processor of the memory node cannot obtain information about access of the compute node to the cache data. Therefore, when the memory node cannot obtain global access information of the distributed system, the memory node cannot perform accurate cache replacement on cache data that needs to be replaced.

## SUMMARY

This application provides a cache replacement method, apparatus, and system, to improve an overall cache hit rate in a distributed system.

According to a first aspect, this application provides a cache replacement method, applied to a compute node in a distributed system of a disaggregated memory architecture. The distributed system further includes a memory node. Cache data stored in the memory node includes plurality of data objects. The compute node bypasses a processor (central processing unit, CPU) of the memory node when accessing the cache data stored in the memory node. The compute node sends a first read operation request to the memory node, where the first read operation request indicates to read access information of the plurality of data objects from the memory node. Then, the compute node separately calculates popularities of the plurality of data objects based on the access information of the plurality of data objects by using a first cache replacement algorithm in a plurality of cache replacement algorithms. Finally, when the compute node needs to perform cache replacement on the cache data, the compute node sends a cache replacement request to the memory node based on the popularities of the plurality of data objects, where the cache replacement request indicates to replace cold data in the plurality of data objects with a data object to be inserted into the memory node.

The cold data may be one or more data objects whose popularities are less than a popularity threshold in the plurality of data objects, or may be first n data objects sorted in ascending order of the popularities in the plurality of data objects, where n is a positive integer.

Based on the foregoing cache replacement method, the compute node obtains global access information of the distributed system based on metadata (metadata) of a plurality of candidate data objects in the cache data, so that the first cache replacement algorithm can be selected based on the global access information to perform cache replacement on the cache data stored in the memory node. In this way, the compute node executes the cache replacement algorithm based on the global access information, thereby implementing accurate cache replacement in the distributed system of the disaggregated memory architecture.

In a possible implementation, the memory node stores metadata of the cache data. When the cache data includes the plurality of data objects, the metadata of the cache data includes respective metadata of the plurality of data objects. An example in which the plurality of data objects include a first data object is used. Metadata of the first data object includes access information to which the first data object is accessed. After accessing the first data object, the compute node sends a metadata update request to the memory node. The metadata update request indicates to update access information of the first data object.

Based on the foregoing implementation, in comparison with that the memory node cannot sense access information of the compute node for the cache data when executing the cache replacement algorithm, the memory node maintains the global access information of the distributed system based on data access, so that the compute node can obtain valid global access information from the memory node to execute the cache replacement algorithm.

Optionally, the access information includes a last access timestamp and a quantity of access times. For example, access information of the metadata of the first data object includes a timestamp at which the first data object is accessed last time and a quantity of times that the first data object is accessed. In this way, after obtaining the access information of the data object, the compute node can use the cache replacement algorithm to accurately calculate, based on the last access timestamp and the quantity of access times, cold data that needs to be replaced from the memory node.

In a possible implementation, the metadata of the cache data stored in the memory node is stored in a format of a hash table. The hash table includes a plurality of hash slots (slot), each hash slot is used for storing metadata of one data object, and each hash slot includes a length field, a pointer field, a last access timestamp field, and a quantity of access times field.

The length field indicates a length of a data object to which metadata belongs. The pointer field indicates an address of the data object to which the metadata belongs in the memory node. The last access timestamp field indicates a moment at which the data object to which the metadata belongs is accessed last time. The quantity of access times field indicates a quantity of times that the data object to which the metadata belongs is accessed.

Optionally, the hash table includes a plurality of hash buckets (bucket), and each hash bucket includes a plurality of hash slots.

Optionally, each hash slot may be divided into an atomic field and a metadata field. The atomic field may include an object identifier field, a length field, and a pointer field. The object identifier field indicates an identifier of a data object to which metadata belongs. The metadata field may include an access timestamp field, a quantity of access times field, a data content field, and a quantity of access times field. The data content field indicates a hash value of data content of a data object to which metadata belongs. The quantity of access times field indicates a quantity of times that the data object to which the metadata belongs is accessed.

According to the foregoing implementation, the memory node stores the metadata of the cache data in the format of the hash table, so that the compute node can quickly query the metadata of the data object based on the hash table, and the compute node subsequently performs an operation on the metadata, thereby improving overall data access efficiency of the distributed system.

In a possible implementation, the metadata update request includes a first write operation request and a first atomic counting operation request. The first write operation request indicates to set a value of a last access timestamp field in metadata of a second data object to a timestamp at which the compute node initiates data access. The first atomic counting operation request indicates to increase a value of a quantity of access times field by 1. In this way, the compute node performs an operation on the metadata of the data object by using an atomic operation, thereby ensuring overall data consistency in the distributed system.

In a possible implementation, after replacing the cold data from the memory node, the compute node may further convert metadata of the cold data into a historical record entry, to provide a data basis for subsequent detection of whether different cache replacement algorithms cause an access miss (cache miss). An example in which the cold data includes a second data object is used. After replacing the second data object from the memory node, the compute node sends a historical record entry generation request to the memory node. The historical record entry generation request indicates to convert the metadata of the second data object into a historical record entry. The historical record entry indicates a second cache replacement algorithm used when cache replacement is performed on the second data object.

Optionally, same as the metadata, the historical record entry is stored in the hash slot of the hash table, and the hash slot includes a type field and an algorithm identifier field. The type field indicates that cache replacement has been performed on the data object to which the historical record entry belongs. The algorithm identifier field indicates the second cache replacement algorithm used when cache replacement is performed on the data object to which the historical record entry belongs.

Optionally, the historical record entry is obtained by converting the metadata of the data object. The historical record entry generation request includes an atomic swapping operation request and a second write operation request. The atomic swapping operation request indicates to modify a value of a length field in the metadata of the second data object to a value of the type field. The second write operation request indicates to replace a value of a field that is in the metadata of the second data object and that is used for representing access information with a value used for representing the second cache replacement algorithm used when cache replacement is performed on the second data object. In this way, the compute node can convert metadata of object data into the historical data entry by using the historical record entry generation request, thereby implementing reuse of the hash table, and reducing consumption of a storage resource of the memory node.

In a possible implementation, when access to the second data object stored in the memory node is a miss, the compute node determines that the memory node stores the historical record entry of the second data object. Then, the compute node sends a second read operation request to the memory node. The second read operation request is used for reading the historical record entry of the second data object from the memory node, and a value of an algorithm identifier field of the historical record entry of the second data object indicates the second cache replacement algorithm. Finally, the compute node reduces a weight of the second cache replacement algorithm. In this way, the compute node determines, based on a historical record entry of a data object of the memory node that is incorrectly replaced, a cache replacement algorithm used for replacing the data object, to dynamically adjust weights of the plurality of cache replacement algorithms based on a data access mode, so that the compute node can select, based on the weights of the plurality of cache replacement algorithms, a cache replacement algorithm applicable to a current data access mode, thereby reducing a probability of replacing the cache data from the memory node that needs to be accessed by the compute node, and improving an overall cache hit rate of the distributed system.

Optionally, after reducing the weight of the second cache replacement algorithm, the compute node sends a third write operation request to the memory node. The third write operation request indicates to write a reduced weight of the second cache replacement algorithm into the memory node, so that the memory node combines the reduced weight of the second cache replacement algorithm into a global algorithm weight, and returns the combined global algorithm weight to the compute node. In this way, when the memory node cannot sense global data access information, global update of an algorithm weight in the distributed system is implemented, and accuracy of weights of the plurality of cache replacement algorithms recorded by the compute node is ensured.

In a possible implementation, when remaining storage space of the memory node is less than a size of the data object to be inserted, or remaining storage space of the memory node is less than a preset threshold, the compute node determines that cache replacement needs to be performed on the cache data, and sends the cache replacement request to the memory node.

According to a second aspect, this application provides a cache replacement method, applied to a compute node and a memory node that are in a distributed system of a disaggregated memory architecture. Cache data stored in the memory node includes a plurality of data objects, and the compute node bypasses a processor of the memory node when accessing the cache data stored in the memory node. The compute node sends a first read operation request to the memory node. The memory node returns access information of the plurality of data objects to the compute node based on the first read operation request. Then, the compute node separately calculates popularities of the plurality of data objects based on the access information of the plurality of data objects by using a first cache replacement algorithm in a plurality of cache replacement algorithms. Finally, when the compute node needs to perform cache replacement on the cache data, the compute node sends a cache replacement request to the memory node based on the popularities of the plurality of data objects. The cache replacement request indicates to replace cold data in the plurality of data objects with a data object to be inserted into the memory node.

According to a third aspect, this application provides a cache replacement apparatus, including a transceiver module and a processing module. The transceiver module is configured to send a first read operation request to a memory node, where the first read operation request is used for reading access information of a plurality of data objects from the memory node, and cache data stored in the memory node includes the plurality of data objects. The processing module is configured to separately calculate popularities of the plurality of data objects based on the access information of the plurality of data objects by using a first cache replacement algorithm in a plurality of cache replacement algorithms. The transceiver module is further configured to: when cache replacement needs to be performed on the cache data, send a cache replacement request to the memory node based on the popularities of the plurality of data objects, where the cache replacement request indicates to replace cold data in the plurality of data objects with a data object to be inserted into the memory node.

In a possible implementation, the cache replacement apparatus may further include other modules for performing operation steps of the cache replacement method according to the first aspect.

According to a fourth aspect, this application provides a cache replacement system, including a client and a serving end. The client is configured to send a first read operation request to a memory node, where the first read operation request is used for reading access information of a plurality of data objects from the memory node, and cache data stored in the memory node includes the plurality of data objects. The serving end is configured to return the access information to the client based on the first read operation request. The client is further configured to separately calculate popularities of the plurality of data objects based on the access information of the plurality of data objects by using a first cache replacement algorithm in a plurality of cache replacement algorithms. The client is further configured to: when cache replacement needs to be performed on the cache data, send a cache replacement request to the memory node based on the popularities of the plurality of data objects, where the cache replacement request indicates to replace cold data in the plurality of data objects with a data object to be inserted into the memory node.

For technical principles and beneficial effects of the second aspect, the third aspect, and the fourth aspect, refer to related descriptions of the first aspect. Details are not described herein again.

According to a fifth aspect, this application provides a computing device cluster, including at least one computing device, where each computing device includes a processor and a storage. The processor of the at least one computing device is configured to execute instructions stored in the storage of the at least one computing device, to cause the computing device cluster to perform the cache replacement method according to any one of the possible implementations of the first aspect.

According to a sixth aspect, this application provides a computing device cluster, including at least one computing device, where each computing device includes a processor and a storage. The processor of the at least one computing device is configured to execute instructions stored in the storage of the at least one computing device, to cause the computing device cluster to perform the cache replacement method according to any one of the possible implementations of the second aspect.

According to a seventh aspect, this application provides a computer program product. The computer program product includes a computer program or instructions. When the computer program or the instructions run on a computer, the computer is caused to perform the cache replacement method according to any one of the possible implementations of the first aspect.

According to an eighth aspect, this application provides a computer program product. The computer program product includes a computer program or instructions. When the computer program or the instructions run on a computer, the computer is caused to perform the cache replacement method according to any one of the possible implementations of the second aspect.

According to a ninth aspect, this application provides a computer-readable storage medium. The readable storage medium includes a computer program or instructions. When the computer program or the instructions run on a computer, the computer is caused to perform the cache replacement method according to any one of the possible implementations of the first aspect.

According to a tenth aspect, this application provides a computer-readable storage medium. The readable storage medium includes a computer program or instructions. When the computer program or the instructions run on a computer, the computer is caused to perform the cache replacement method according to any one of the possible implementations of the second aspect.

**BRIEF DESCRIPTION OF DRAWINGS**

FIG. 1 is a diagram of an architecture of a distributed system according to this application;
FIG. 2 is a schematic flowchart of a cache replacement method according to this application;
FIG. 3 is a diagram of a structure of a hash table according to this application;
FIG. 4 is a schematic flowchart of update steps of access information according to this application;
FIG. 5 is a diagram of a structure of a historical record entry according to this application;
FIG. 6 is a schematic flowchart of conversion steps of a historical record entry according to this application;
FIG. 7 is a schematic flowchart of priority adjustment steps of a cache replacement algorithm according to this application;
FIG. 8 is a diagram of a structure of a cache replacement apparatus according to this application;
FIG. 9 is a diagram of a structure of another cache replacement apparatus according to this application;
FIG. 10 is a diagram of a structure of a cache replacement system according to this application;
FIG. 11 is a diagram of a structure of a computing device according to this application; and
FIG. 12 is a diagram of a structure of a computing device cluster according to this application.

**DESCRIPTION OF EMBODIMENTS**

A cache replacement method, apparatus, and system provided in embodiments of this application can be applied to a cache replacement scenario in a distributed system of a disaggregated memory architecture. Technologies that may be used in this application are briefly described.

(1) Distributed system

A distributed system, also referred to as a distributed computer system, is a system formed by a plurality of distributed computing devices connected via a communication line. Different functions (such as processing, control, and storage) of the system are distributed in the computing devices. Based on system functions, the distributed system includes a distributed storage system, a distributed computing system, a distributed message queue system, a distributed machine learning system, and the like.

The distributed storage system is a system in which data is stored on a plurality of independent storage nodes in a distributed manner. A distributed network storage system is of an expandable system structure and uses a plurality of storage nodes to share storage loads. This improves reliability, availability, and access efficiency of the storage system, and is also easy to expand.

(2) Disaggregated memory architecture

A disaggregated memory architecture is an architecture of a distributed system. In a conventional architecture, a processor and a memory that are located on a same mainboard are physically separated to construct two independent resource pools: a computing pool and a memory pool. The computing pool includes a plurality of compute nodes, and each compute node includes a large quantity of computing resources (for example, a processor (Central Processing Unit, CPU) core) and a small quantity of storage resources (for example, a dynamic random access memory (Dynamic Random Access Memory, DRAM)). The storage resources in the compute node are used as running caches. The memory pool includes a large quantity of memory nodes, and each memory node includes a large quantity of storage resources and a small quantity of computing resources. The computing resources in the memory node are used for management, for example, network connection management and memory space management, and the storage resources are used for data storage.

The computing pool and the memory pool are interconnected via a network, so that the compute node directly accesses data on the memory node without using a processor in the memory pool, thereby effectively improving resource utilization and elasticity of a cache system. The computing pool and the memory pool may be interconnected through remote direct data access (Remote Direct Memory Access, RDMA), a remote procedure call (Remote Procedure Call, RPC) protocol, or the like.

(3) Cache replacement algorithm

A cache replacement algorithm is also referred to as a cache algorithm, and is applied to a cache device with limited storage space (for example, a memory node in a distributed system of a disaggregated memory architecture). An objective of the cache replacement algorithm is to cause the limited cache space to store, as much as possible, hot data that is frequently accessed, so as to ensure a cache hit rate as much as possible. The cache replacement algorithm generally includes three steps. First, the cache replacement algorithm records all access information about data objects in cache space, such as an access timestamp and a quantity of access times. Second, the cache replacement algorithm determines popularities of the data objects in the cache space based on the access information in the record. Finally, the cache replacement algorithm maintains the popularities of the data objects into a specific cache data structure, so as to quickly perform cache replacement on cold data when the cache space is full.

The cache replacement algorithm includes a least-recently-used (least-recently-used, LRU) algorithm, a least-frequently-used (least-frequently-used, LFU) algorithm, a random replacement algorithm, a first in first out (first in first out, FIFO) algorithm, and a length (size) replacement algorithm.

This application provides a cache replacement method, and in particular, a cache replacement method of "selecting, by a compute node, a cache replacement algorithm conforming to a current data access mode". In a distributed system of a disaggregated memory architecture, the compute node sends a first read operation request to a memory node, where the first read operation request is used for reading access information of a plurality of data objects in cache data from the memory node. The compute node separately calculates popularities of the plurality of data objects based on the access information of the plurality of data objects by using a first cache replacement algorithm in a plurality of cache replacement algorithms. When the compute node needs to perform cache replacement on the cache data, the compute node sends a cache replacement request to the memory node based on the popularities of the plurality of data objects, where the cache replacement request indicates to replace cold data in the plurality of data objects from the memory node. In this way, the compute node obtains global access information of the distributed system based on metadata of a plurality of candidate data objects in the cache data, so that the first cache replacement algorithm can be selected based on the global access information to perform cache replacement on the cache data stored in the memory node. The compute node executes the cache replacement algorithm based on the global access information, thereby implementing accurate cache replacement in the distributed system of the disaggregated memory architecture.

The following describes implementations of embodiments of this application in detail with reference to the accompanying drawings.

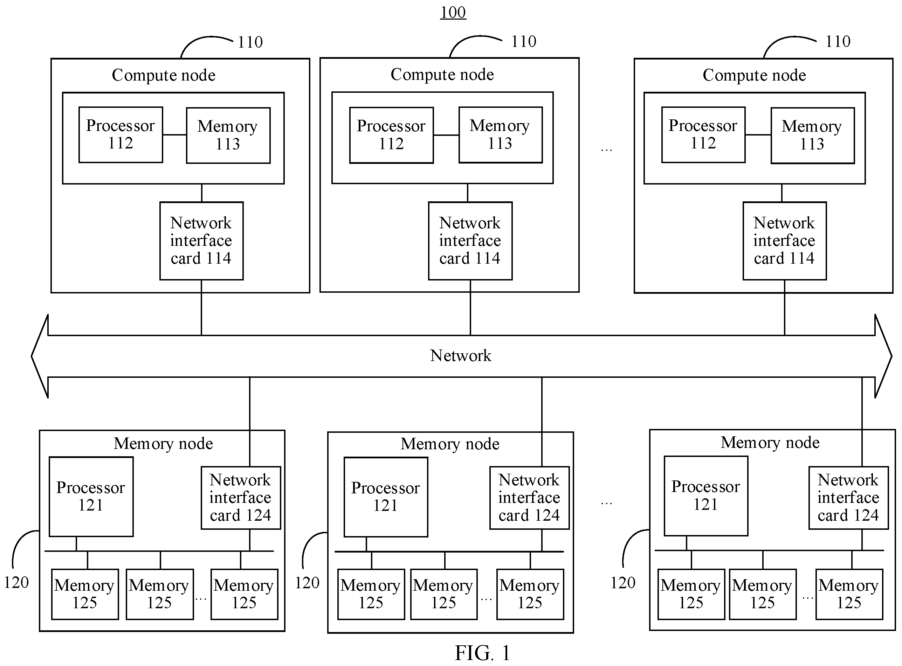

As shown in FIG. 1, a distributed system 100 provided in this application includes a compute node cluster and a memory node cluster. The compute node cluster forms a computing pool, and the memory node cluster forms a memory pool.

The compute node cluster includes one or more compute nodes 110 (where FIG. 1 shows three compute nodes 110, but is not limited to three compute nodes 110), and the compute nodes 110 may communicate with each other. The compute node 110 is a computing device, for example, a server, a desktop computer, or a controller of a storage array. In terms of hardware, as shown in FIG. 1, the compute node 110 includes at least a processor 112, a memory 113, and a network interface card 114. The processor 112 is a central processing unit, and is configured to process a data access request from the outside of the compute node 110 or a request generated inside the compute node 110. For example, when receiving data write requests sent by a user, the processor 112 temporarily stores data in the data write requests in the memory 113. When a total amount of data in the memory 113 reaches a specific threshold, the processor 112 sends the data stored in the memory 113 to a memory node 120 for persistent storage. In addition, the processor 112 is further configured to perform calculation or processing on data, for example, metadata management, deletion of deduplicated data, data compression, virtualization of storage space, and address translation. FIG. 1 shows only one CPU 112. In actual application, there are usually a plurality of CPUs 112, and one CPU 112 has one or more CPU cores. A quantity of CPUs and a quantity of CPU cores are not limited in this embodiment.

The memory 113 is an internal storage that directly exchanges data with the processor. The data can be read and written in the memory at a high speed at any time, and the memory serves as a temporary data storage of an operating system or another running program. The memory may include a plurality of types of storages, for example, the memory may be a random access memory (random access memory, RAM) or a read-only memory (read-only memory, ROM). For example, the random access memory is a dynamic random access memory, or a storage class memory (storage class memory, SCM). However, the DRAM and the SCM are merely examples for description in this embodiment. The memory may further include another random access memory, for example, a static random access memory (static random access memory, SRAM). For example, the read-only memory may be a programmable read-only memory (programmable read-only memory, PROM) or an erasable programmable read-only memory (erasable programmable read-only memory, EPROM). In addition, the memory 113 may also be a dual-line memory module or a dual in-line memory module (dual In-line memory module, DIMM), that is, a module formed by a dynamic random access memory. In actual application, a plurality of memories 113 and different types of memories 113 may be configured in the compute node 110. In addition, the memory 113 may be configured to have a power protection function. The power protection function means that data stored in the memory 113 is not lost when a system is powered off and then powered on again. A memory having the power protection function is referred to as a non-volatile memory.

The network interface card 114 is configured to communicate with the memory node 120. For example, when a total amount of data in the memory 113 reaches a specific threshold, the compute node 110 may send a request to the memory node 120 through the network interface card 114, to perform persistent storage on the data. In addition, the compute node 110 may further include a bus configured for communication between components inside the compute node 110. In terms of functions, a main function of the compute node 110 in FIG. 1 is a computing service, and a remote storage may be used to implement persistent storage during data storage. Therefore, the compute node has fewer local storages than a conventional server, thereby reducing costs and space. However, this does not mean that the compute node 110 cannot have a local storage. In actual implementation, the compute node 110 may alternatively have a small quantity of built-in hard disk drives or a small quantity of external hard disk drives.

Any compute node 110 may access any memory node 120 in the memory node cluster via a network. The memory node cluster includes a plurality of memory nodes 120 (FIG. 1 shows three memory nodes 120, but is not limited to three memory nodes 120). One memory node 120 includes one or more processors 121, a network interface card 124, and a plurality of memories 125. The network interface card 124 is configured to communicate with the compute node 110. The memory 125 is configured to store data, for example, cache data of the compute node 110. The memory 125 is similar to the foregoing memory 113, and details are not described herein again. The processor 121 is configured to perform management, for example, network connection management and memory space management.

The distributed system 100 in this application uses a disaggregated memory architecture, and the compute node 110 bypasses a processor of the memory node 120 when accessing cache data stored in the memory node 120. For example, the compute node 110 directly accesses data on the memory node 120 through remote direct data access, a remote procedure call protocol, a compute express link (Compute Express Link, CXL), or the like without passing through the processor 121 of the memory node 120. Therefore, compared with the memory node 120, the compute node 110 in the distributed system 100 may include a large quantity of CPU cores and a small quantity of DRAMs, and the memory node 120 may include a large quantity of DRAMs and a small quantity of CPU cores.

When the compute node 110 directly accesses data on the memory node 120 through remote direct data access, a remote procedure call protocol, or the like. In comparison with a conventional manner in which the processor of the memory node 120 performs access control, a function of the processor is offloaded to the network interface card 114. The network interface card 124 completes data read/write, address translation, and other calculation functions. In this case, the network interface card 124 is an intelligent network interface card, and a corresponding network interface card 114 is also an intelligent network interface card, for example, an intelligent network interface card supporting RDMA. The network interface card 124 may include a processor, for example, a CPU. The CPU is configured to perform operations such as address translation and data read/write. A processor of the network interface card 124 may also be a programmable electronic component, for example, a data processing unit (data processing unit, DPU).

The compute node, the memory node, and the like in the distributed system 100 provided in this application may be hardware devices such as computing servers or storage servers, or may be nodes on a cloud platform. For example, on an infrastructure, for example, a computing server cluster or a storage server cluster, the distributed system 100 implements functions of nodes such as the compute node and the memory node based on an infrastructure as a service, a platform as a service, and software as a service, and provides a service (for example, a computing service, a storage service, and a network service) via a virtualized cloud node.

The following specifically describes a cache replacement method provided in this application with reference to the accompanying drawings.

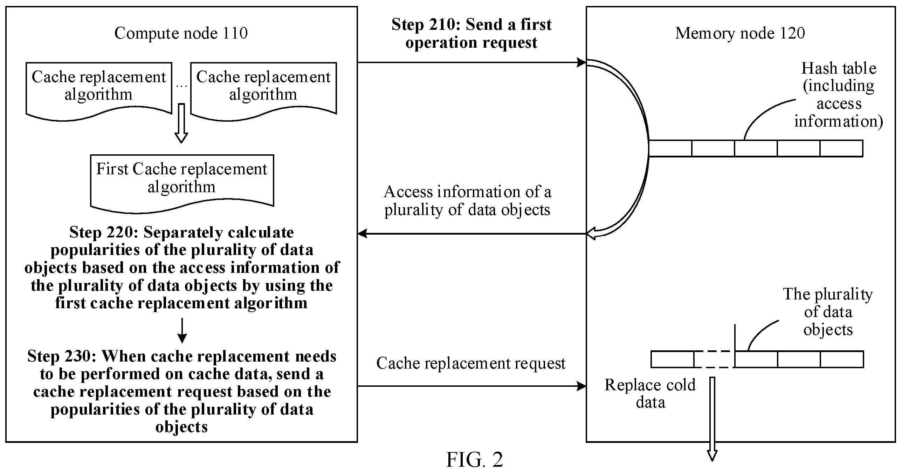

Steps of the cache replacement method provided in this application are performed by the compute node 110 and the memory node 120 in the distributed system 100. The following describes step 210 to step 230 of the cache replacement method with reference to FIG. 2.

Step 210: The compute node 110 sends a first read operation request to the memory node 120.

In a possible example, the compute node 110 sends the first read operation request to the memory node 120. The first read operation request is used for reading access information of a plurality of data objects from the memory node 120. For example, the first read operation request is an RDMA read (read) operation request. The plurality of data objects may be obtained through random sampling.

Optionally, the access information includes a last access timestamp and a quantity of access times. The last access timestamp indicates a moment at which a data object to which the access information belongs is accessed last time. The quantity of access times indicates a quantity of times that the data object to which the access information belongs is accessed.

In this application, a type of data included in the access information is limited. The access information may further include any type of data based on different types of data that needs to be used for the cache replacement algorithm. For example, the access information further includes an insertion timestamp, an object size, access interval duration, an access overhead, and the like.

In this embodiment of this application, the access information is stored in the memory node 120 in a form of metadata. To ensure operation efficiency of the access information and reduce space occupied by the access information, a format of the metadata may be a hash table.

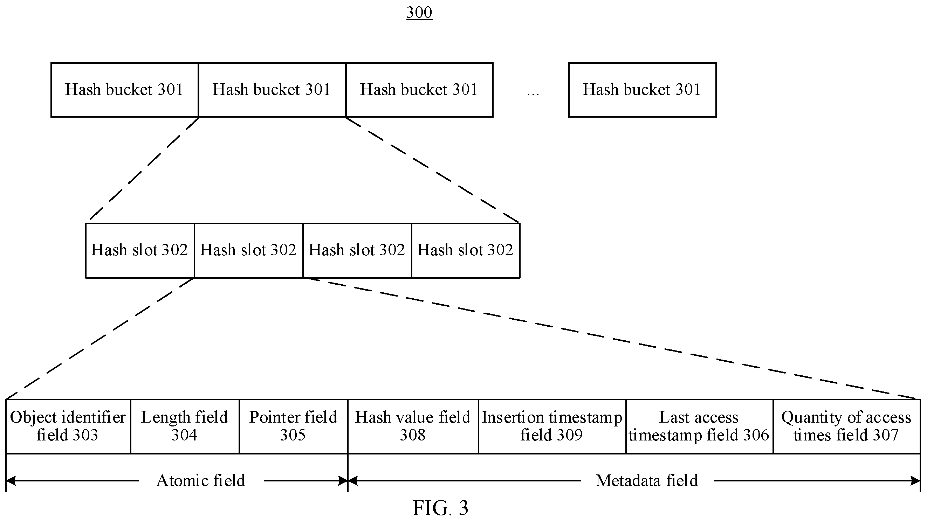

As shown in FIG. 3, the hash table 300 includes a plurality of hash buckets 301, and each hash bucket 301 includes a plurality of hash slots 302 (where FIG. 3 shows only four hash slots, but it is not limited to four hash slots). Each hash slot 302 includes an atomic field and a metadata field. The atomic field includes an object identifier field 303, a length field 304, and a pointer field 305. The metadata field includes a last access timestamp field 306 and a quantity of access times field 307.

One hash slot 302 is used for storing metadata of one piece of object data. A value stored in the object identifier field 303 indicates a data object to which the metadata belongs, and is referred to as an object identifier. For example, the data object is a key-value (key-value) pair, and the object identifier field 303 is used for storing a key.

A value stored in the length field 304 indicates a length of the data object to which the metadata belongs. The length of the data object may also be one type of access information, that is, the object size.

A value stored in the pointer field 305 indicates an address of the data object to which the metadata belongs in the memory node 120.

A value stored in the last access timestamp field 306 indicates a timestamp at which the data object to which the metadata belongs is accessed last time.

A value stored in the quantity of access times field 307 indicates a quantity of times that the data object to which the metadata belongs is accessed.

A field type included in the hash slot 302 is not limited in this application. A field may be further added to or deleted from the hash slot 302 based on different types of data included in the access information. For example, the metadata field further includes a hash value field 308 and an insertion timestamp field 309.

A value stored in the hash value field 308 is a hash value of the data object to which the metadata belongs.

A value stored in the insertion timestamp field 309 indicates a timestamp at which the data object to which the metadata belongs is inserted into the memory node 120.

Based on the hash table 300, the compute node 110 sends the first read operation request to the memory node 120, where the first read operation request may carry an object identifier, and the compute node is configured to query, based on the object identifier, the hash table 300 for a hash slot 302 in which a value of an object identifier field 303 is the carried object identifier, and read values of the last access timestamp field 306 and the quantity of access times field 307 in the hash slot 302.

A length of each field in the hash table 300 is not limited in this application. For example, a length of the object identifier field 303 is 1 bit, a length of the length field 304 is 1 bit, a length of the pointer field 305 is 6 bits, and lengths of the last access timestamp field 306, the quantity of access times field 307, the hash value field 308, and the insertion timestamp field 309 are all 8 bits.

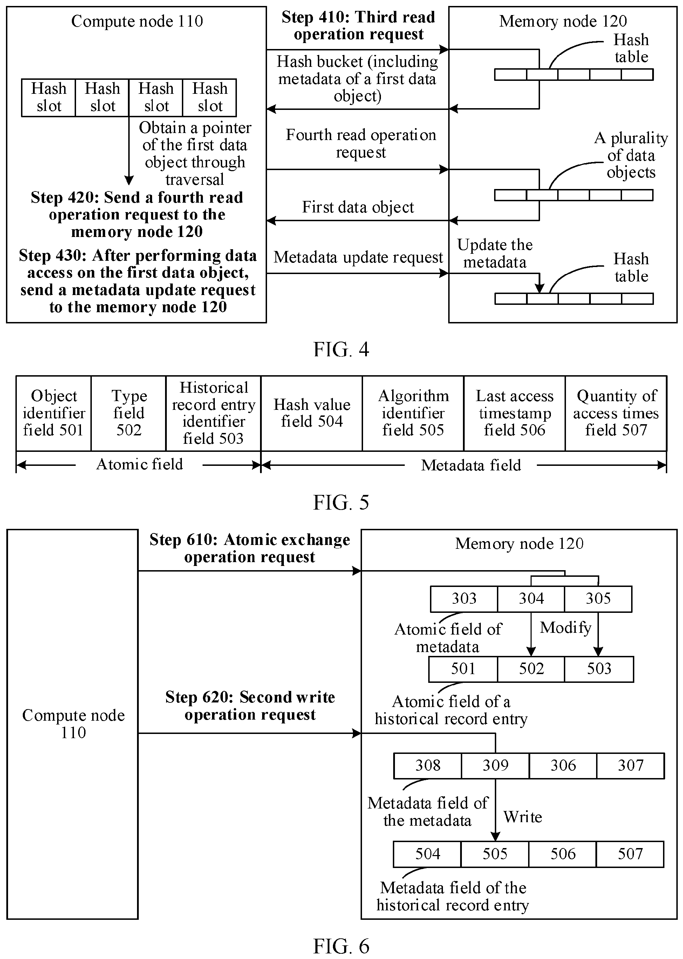

In a possible embodiment of this application, the access information has instantaneity, that is, the compute node 110 needs to update the access information of the data object based on access to the data object. For a step of updating the access information by the compute node 110, refer to step 410 to step 430 shown in FIG. 4 below. Details are not described herein.

Step 220: The compute node 110 separately calculates popularities of the plurality of data objects based on the access information of the plurality of data objects by using a first cache replacement algorithm in a plurality of cache replacement algorithms.

In a possible example, the compute node 110 separately substitutes the access information of the plurality of data objects into the first cache replacement algorithm, to separately calculate the popularities of the plurality of data objects.

In a possible implementation, the compute node 110 locally maintains the plurality of cache replacement algorithms and priorities of the plurality of cache replacement algorithms, and the compute node 110 selects a cache replacement algorithm with a highest priority from the plurality of cache replacement algorithms as the first cache replacement algorithm. A higher priority of the cache replacement algorithm indicates that the cache replacement algorithm is more applicable to a current data access mode, and a probability that a data object replaced based on the first cache replacement algorithm is frequently accessed is lower, that is, a probability of an access miss of a subsequent data object is lower.

The priority of the cache replacement algorithm is adjusted in real time based on data access in running of the distributed system 100. For example, the priority of the cache replacement algorithm is adjusted in real time based on a historical record entry in which an access miss appears on a replaced data object that is incorrectly replaced by using the cache replacement algorithm. The historical record entry in this embodiment of this application may be obtained by converting metadata, and indicates a cache replacement algorithm used when cache replacement is performed on a data object to which the metadata belongs. For a specific data structure of the historical record entry, refer to FIG. 5 and related descriptions below. For conversion steps for the historical record entry, refer to step 610 and step 620 shown in FIG. 6 below. Details are not described herein.

Optionally, the plurality of cache replacement algorithms maintained by the compute node 110 may include a least-recently-used algorithm, a least-frequently-used algorithm, a random replacement algorithm, a first in first out algorithm, a length replacement algorithm, and the like.

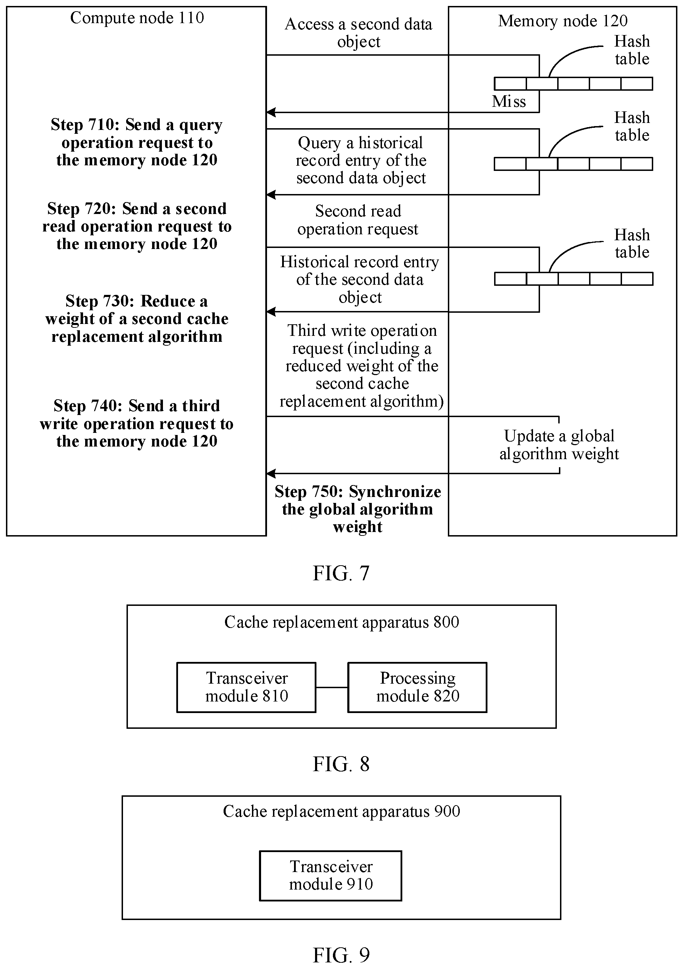

In this embodiment, for a specific step in which the compute node 110 adjusts the priority of the cache replacement algorithm based on the foregoing historical record entry, refer to step 710 to step 750 shown in FIG. 7 below. Details are not described herein.

Compared with executing the cache replacement algorithm by the memory node 120, executing the cache replacement algorithm by the compute node 110 avoids occupation of a computing resource of the memory node 120, thereby avoiding affecting a data access throughput and a data access delay due to an insufficient computing capability of the memory node 120. In addition, the compute node can sense global access information, and select a cache replacement algorithm applicable to the current data access mode to perform cache replacement based on the global access information, thereby reducing a probability of replacing, from the memory node, the cache data that needs to be accessed by the compute node, and improving an overall cache hit rate of the distributed system.

Step 230: When the compute node 110 needs to perform cache replacement on the cache data, the compute node sends a cache replacement request to the memory node based on the popularities of the plurality of data objects.

In a possible example, after calculating the popularities of the plurality of data objects by using the first cache replacement algorithm, the compute node 110 determines cold data in the plurality of data objects based on the popularities of the plurality of data objects, and sends the cache replacement request to the memory node 120 based on the cold data. The cache replacement request indicates to replace the cold data in the plurality of data objects with a data object to be inserted into the memory node 120.

In a first possible implementation, when inserting the to-be-inserted data object into the memory node 120, the compute node 110 determines, when determining that remaining storage space of the memory node 120 is less than a size of the to-be-inserted data object, that cache replacement needs to be performed on the cache data stored in the memory node 120.

In a second possible implementation, when elapsed duration since last cache replacement performed on the cache data stored in the memory node 120 reaches a threshold, the compute node 110 determines that cache replacement needs to be performed on the cache data stored in the memory node 120.

In a third possible implementation, when the remaining space of the memory node 120 is less than the threshold, the compute node 110 determines that cache replacement needs to be performed on the cache data stored in the memory node 120.

Optionally, the cold data is a data object with a lowest popularity in the plurality of data objects.

Optionally, the cold data is first n data objects sorted in ascending order of the popularities in the plurality of data objects, where n is a positive integer.

In the foregoing two cold data determining manners, the step of determining, by the computing device 110, cold data based on the popularities of the plurality of data objects may be integrated into the cache replacement algorithm.

Optionally, the cache replacement request is an RDMA write (write) operation request.

In this embodiment of this application, the compute node 110 bypasses the processor 121 of the memory node 120 when accessing the cache data stored in the memory node 120, and the processor 121 of the memory node 120 does not perform a data access-related operation, and only provides a data storage function, for example, returns the access information of the plurality of data objects to the memory node 120 based on the first read operation request. Therefore, an operation performed by the memory node 120 is not separately shown in FIG. 2. In another possible embodiment, the operation performed by the memory node 120 may be presented as an interaction operation with the compute node 110. For example, between step 210 and step 220, the following step is further included: The memory node 120 returns the access information of the plurality of data objects to the compute node 110 based on the first read operation request.

Based on the foregoing step 210 to step 230, the compute node obtains the global access information of the distributed system based on metadata of a plurality of candidate data objects in the cache data, so that the first cache replacement algorithm can be selected based on the global access information to perform cache replacement on the cache data stored in the memory node. In this way, the compute node executes the cache replacement algorithm based on the global access information, thereby implementing accurate cache replacement in the distributed system of the disaggregated memory architecture.

The foregoing generally describes the cache replacement algorithm provided in this application based on FIG. 2 and FIG. 3. The following describes in detail the step of updating the access information by the compute node 110 with reference to FIG. 4. As shown in FIG. 4, the step of updating the access information by the compute node 110 may include the following step 410 to step 430.

Step 410: The compute node 110 sends a third read operation request to the memory node 120.

In a possible example, when performing data access, the compute node 110 sends the third read operation request to the memory node 120, to indicate to read an address of a first data object in the memory node 120 from the memory node 120.

In a possible implementation, metadata of the first data object is stored in the memory node 120 in a form of a hash table, and the third read operation request indicates to read, from the memory node 120, a value of a pointer field in a hash slot indicated by an object identifier.

Optionally, when performing data access, the compute node 110 calculates a hash value based on an object identifier of a data object to be accessed, and locates a hash bucket based on the hash value. The third read operation request is used for reading a value of the located hash bucket. For example, the third read operation request is an RDMA read operation request.

After reading the value of the located hash bucket, the compute node 110 queries, through traversal, a value of a pointer field of the first data object in the hash bucket based on an object identifier of the first data object.

Step 420: The compute node 110 sends a fourth read operation request to the memory node 120.

In a possible example, the compute node 110 sends the fourth read operation request to the memory node 120 based on the address of the first data object in the memory node 120. The fourth read operation request carries the address of the first data object in the memory node 120, and indicates to read the data object from the memory node 120 based on the address of the first data object in the memory node 120.

In a possible implementation, the metadata of the first data object is stored in the memory node 120 in a form of a hash table, and the address that is carried in the fourth read operation request and that is of the first data object in the memory node 120 is a value of a pointer field in the metadata of the first data object.

Optionally, the fourth read operation request is an RDMA read operation request.

Step 430: After performing data access on the first data object, the compute node 110 sends a metadata update request to the memory node 120.

In a possible example, after performing data access on the first data object, the compute node 110 sends the metadata update request to the memory node 120, to indicate to update the access information of the first data object.

In a possible implementation, the metadata update request includes a first write operation request and a first atomic counting operation request. Optionally, the first write operation request is an RDMA write operation request, and the first atomic counting operation request is an RDMA fetch_and_add operation request.

For example, the metadata is stored in the memory node 120 in a form of a hash table. The first write operation request indicates to set a value of a last access timestamp field in the metadata of the first data object to a timestamp at which the compute node 110 initiates data access, that is, a timestamp at which the compute node 110 sends the third read operation request. The first atomic counting operation request indicates to increase a value of a quantity of access times field in the metadata of the first data object by 1.

The foregoing step 410 to step 430 are described by using an example in which the compute node 110 performs a read operation on the memory node 120. In another possible embodiment, access of the compute node 110 to the data object may alternatively be a set operation or the like. Details are not described herein.

Based on the foregoing step 410 to step 430, the compute node 110 implements global sensing of access to the data object and global update of the access information, to provide a data basis for subsequently calculating the popularity of the data object based on the access information of the data object.

In this embodiment of this application, in addition to updating the metadata of the data object based on access to the data object, the compute node 110 may further convert, after a data object is replaced from the memory node 120, metadata of the data object that is replaced from the memory node 120, to obtain a historical record entry, so as to record a cache replacement algorithm used when the data object is replaced from the memory node 120.

In this embodiment of this application, in consideration of reduction of space occupied by the historical record entry in the memory node 120 and index overheads, the historical record entry may be stored by reusing the hash table. First, a structure of the historical record entry is described with reference to FIG. 5.

As shown in FIG. 5, when a hash slot used for storing metadata is used for storing a historical record entry, the hash slot includes an atomic field and a metadata field. The atomic field includes an object identifier field 501, a type field 502, and a historical record entry identifier field 503. The metadata field includes a hash value field 504, an algorithm identifier field 505, a last access timestamp field 506, and a quantity of access times field 507.

One hash slot is used for storing a historical data entry of one piece of object data. A value stored in the object identifier field 501 indicates a data object to which a historical data entry belongs, and is referred to as an object identifier. For example, the data object is a key-value pair, and the object identifier field 501 is used for storing a key.

A value stored in the type field 502 indicates that the hash slot stores a historical record entry. For example, the value of the type field 502 is 0xFF.

A value stored in the historical record entry identifier field 503 indicates a location of the historical record entry in a logical first in first out queue.

A value stored in the algorithm identifier field 505 indicates a cache replacement algorithm used when cache replacement is performed on the data object to which the historical record entry belongs. For example, the value stored in the algorithm identifier field 505 is a bitmap (bitmap), and different bits in the bitmap correspond to different cache replacement algorithms. When a bit corresponding to a second cache replacement algorithm in the bitmap is a preset value, the value of the algorithm identifier field 505 indicates the second cache replacement algorithm.

The hash value field 504, the last access timestamp field 506, and the quantity of access times field 507 are the same as the corresponding fields in the metadata shown in FIG. 3. Details are not described herein again.

The following describes steps of conversion between the metadata and the historical record entry with reference to FIG. 6. The compute node 110 sends a historical record entry generation request to the memory node 120, to perform the steps of conversion between the metadata and the historical record entry. Based on the foregoing data format of the historical record entry, the historical record entry generation request sent by the compute node 110 to the memory node 120 may include an atomic swapping operation request and a second write operation request. The second write operation request may be an RDMA write operation request, and the atomic swapping operation request may be an RDMA compare_and_swap operation request. As shown in FIG. 6, the steps of conversion between the metadata and the historical record entry may include the following step 610 and step 620.

Step 610: The compute node 110 sends the atomic swapping operation request to the memory node 120.

In a possible example, after completing cache replacement on a second data object, the compute node 110 sends the atomic swapping operation request to the memory node 120. The atomic swapping operation request indicates to modify a value of a length field in metadata of the second data object to a value of a type field, for example, 0xFF.

Step 620: The compute node 110 sends the second write operation request to the memory node 120.

In a possible example, the compute node 110 sends the second write operation request to the memory node 120. The second write operation request indicates to replace a value of a field that is in the metadata of the second data object and that is used for representing access information with a value used for representing a cache replacement algorithm used when cache replacement is performed on the second data object, for example, a bitmap. A field after replacement is referred to as the algorithm identifier field 505.

In a possible embodiment, the field in the metadata and to be replaced based on the second write operation request may be any one of the foregoing last access timestamp field 306, quantity of access times field 307, and insertion timestamp field 309.

In a possible embodiment of this application, when the historical record entry includes the historical record entry identifier field 503, in the steps of conversion between the metadata and the historical record entry, the pointer field 305 in the metadata further needs to be converted into the historical record entry identifier field 503.

In a possible implementation, the compute node 110 sends a second atomic counting operation request to the memory node 120 before step 610, where the second atomic counting operation request indicates to increase a quantity of global historical record entries by 1, and return a value before the quantity of global historical record entries is increased by 1 as a value of the historical record entry identifier field 503.

In this way, the atomic swapping operation request sent by the compute node 110 to the memory node 120 in step 610 is further used for modifying a value of a pointer field in the metadata of the second data object to the value of the historical record entry identifier field 503.

The following describes a function of the historical record entry identifier field 503.

A value stored in the historical record entry identifier field 503 is referred to as a historical record entry identifier, and the historical record entry identifier indicates a location of a historical record entry to which the historical record entry identifier belongs in a logical first in first out queue.

It is assumed that a value of the historical record entry identifier is u, a quantity of global historical record entries is v, and a length of the logical first in first out queue is s, and the location of the historical record entry in the logical first in first out queue may be represented as the following formula (1).

$$k = \begin{cases} v - u, & if\ u > v \\ v + 2^{48} - u, & if\ u < v \end{cases} \qquad \text{Formula (1)}$$

If k>s, it indicates that the historical record entry to which the historical record entry identifier belongs exceeds a range of the logical first in first out queue, and the compute node 110 may convert the historical record entry back into the metadata. A conversion manner is a reverse step of the step of converting the metadata into the historical record entry. Details are not described herein.

On the basis that the algorithm identifier field 505 of the historical record entry indicates the cache replacement algorithm used when the data object is replaced from the memory node 120, the compute node 110 can dynamically adjust priorities of a plurality of cache replacement algorithms based on the historical data entry. In the following, with reference to FIG. 7, an example in which the priorities of the plurality of cache replacement algorithms are weights and a cache replacement algorithm with a higher weight has a higher priority is used to describe priority adjustment steps of the cache replacement algorithm. As shown in FIG. 7, the priority adjustment steps of the cache replacement algorithm may include the following step 710 to step 750.

Step 710: When access to the second data object stored in the memory node 120 is a miss, the compute node 110 determines that the memory node 120 stores a historical record entry of the second data object.

In a possible example, when access to the second data object stored in the memory node 120 is a miss, the compute node 110 sends a query operation request to the memory node 120, to query the memory node 120 for the historical record entry of the second data object. If the historical record entry of the second data object is found, the compute node 110 determines that the memory node 120 stores the historical record entry of the second data object. If the historical record entry of the second data object is not found, the compute node 110 determines that the historical record entry of the second data object does not exist in the memory node 120.

Step 720: The compute node 110 sends a second read operation request to the memory node 120.

In a possible example, the compute node 110 sends the second read operation request to the memory node 120, where the second read operation request is used for reading the historical record entry of the second data object from the memory node 120.

In a possible implementation, the historical record entry of the second data object includes an algorithm identifier field. For example, a value of the algorithm identifier field indicates a second cache replacement algorithm in the plurality of cache replacement algorithms.

Step 730: The compute node 110 reduces a weight of the second cache replacement algorithm.

In a possible example, the compute node 110 determines that a value of the algorithm identifier field of the historical record entry of the second data object indicates the second cache replacement algorithm, that is, incorrect data replacement is performed by using the second cache replacement algorithm, and the weight of the second cache replacement algorithm is updated according to the following formula (2).

$$\mathrm{w} = \mathrm{w} * e^{\lambda * \mathrm{d}^{t}} \quad \text{Formula (2)}$$

w represents a weight, e represents a natural constant, $\lambda$ represents a learning rate, $d^{t}$ represents a penalty value used for reducing a weight, and d is set to a fixed value to minimize impact of a relatively long error in the historical record entry.

Step 740: The compute node 110 sends a third write operation request to the memory node 120.

In a possible example, the compute node 110 sends the third write operation request to the memory node 120 after reducing the weight of the locally stored second cache replacement algorithm. The third write operation request indicates to write the reduced weight of the second cache replacement algorithm into the memory node 120, so that the memory node 120 combines the reduced weight of the second cache replacement algorithm into a global algorithm weight of the plurality of cache replacement algorithms maintained by the memory node 120, and returns the combined global algorithm weight to the compute node 110.

Step 750: The compute node 110 synchronizes the global algorithm weight with the memory node 120.

In this way, based on the foregoing step 710 to step 750, in the distributed system 100, the compute node 110 maintains a weight of the locally maintained cache replacement algorithm based on the historical record entry, and communicates with the memory node 120 to synchronize the global algorithm weight of the plurality of cache replacement algorithms in the entire distributed system 100. This ensures accuracy of the algorithm weight, so that the compute node 110 can accurately select, based on the weights of the plurality of cache replacement algorithms, a cache replacement algorithm applicable to the current data access mode. In this way, accurate cache replacement is implemented in the distributed system 100 of a disaggregated memory architecture.

To cooperate with the cache replacement method shown in FIG. 2 provided in this application, this application further provides a cache replacement apparatus 800. The cache replacement apparatus 800 may be configured to implement functions of the compute node 110 in the cache replacement method shown in FIG. 2. As shown in FIG. 8, the cache replacement apparatus 800 includes a transceiver module 810 and a processing module 820.

The transceiver module 810 is configured to send a first read operation request to a memory node, where the first read operation request is used for reading access information of a plurality of data objects from the memory node, and cache data stored in the memory node includes the plurality of data objects.

The processing module 820 is configured to separately calculate popularities of the plurality of data objects based on the access information of the plurality of data objects by using a first cache replacement algorithm in a plurality of cache replacement algorithms.

The transceiver module 810 is further configured to: when cache replacement needs to be performed on the cache data, send a cache replacement request to the memory node based on the popularities of the plurality of data objects, where the cache replacement request indicates to replace cold data in the plurality of data objects with a data object to be inserted into the memory node 120.

Both the transceiver module 810 and the processing module 820 may be implemented by using software, or may be implemented by using hardware. For example, the following uses the transceiver module 810 as an example to describe an implementation of the transceiver module 810. Similarly, for an implementation of the processing module 820, refer to the implementation of the transceiver module 810.

A module is used as an example of a software functional unit, and the transceiver module 810 may include code run on a computing instance. The computing instance may include at least one of a physical host (a computing device), a virtual machine, and a container. Further, there may be one or more computing instances. For example, the transceiver module 810 may include code run on a plurality of hosts/virtual machines/containers. It should be noted that the plurality of hosts/virtual machines/containers configured to run the code may be distributed in a same region (region) or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is provided in one region. A communication gateway needs to be configured in each VPC for communication between two VPCs in the same region or between VPCs in different regions. Interconnection between VPCs is implemented through the communication gateway.

A module is used as an example of a hardware functional unit, and the transceiver module 810 may include at least one computing device, for example, a server. Alternatively, the transceiver module 810 may be a device implemented by an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the transceiver module 810 may be distributed in a same region or may be distributed in different regions. The plurality of computing devices included in the transceiver module 810 may be distributed in a same AZ or may be distributed in different AZs. Similarly, the plurality of computing devices included in the transceiver module 810 may be distributed on a same VPC or may be distributed on a plurality of VPCs. The plurality of computing devices may be any combination of computing devices such as a server, an ASIC, a PLD, a CPLD, an FPGA, and GAL.

It should be noted that, in other embodiments, either of the transceiver module 810 and the processing module 820 may be configured to perform any step in the cache replacement method. The steps implemented by the transceiver module 810 and the processing module 820 may be specified as required. The transceiver module 810 and the processing module 820 separately implement different steps in the cache replacement method to implement all functions of the cache replacement apparatus 800.

If the returning, by the memory node 120, data to the compute node 110 is considered as an operation performed by the memory node 120, the cache replacement method further includes steps performed by the memory node 120. To cooperate with the display of the cache replacement method for interaction between the compute node 110 and the memory node 120, this application further provides a cache replacement apparatus 900. The cache replacement apparatus 900 may be configured to implement the cache replacement method for interaction between the compute node 110 and the memory node 120. As shown in FIG. 9, the cache replacement apparatus 900 includes a transceiver module 910.

The transceiver module 910 is configured to return a response to the compute node 110 based on a request of the compute node 110. For example, the transceiver module 910 is configured to return access information of a plurality of data objects to the compute node 110 based on a first read operation request of the compute node 110.

The transceiver module 910 may be implemented by using software, or may be implemented by using hardware. For an implementation of the transceiver module 910, refer to the example of the transceiver module 810 in FIG. 8. Details are not described herein again.

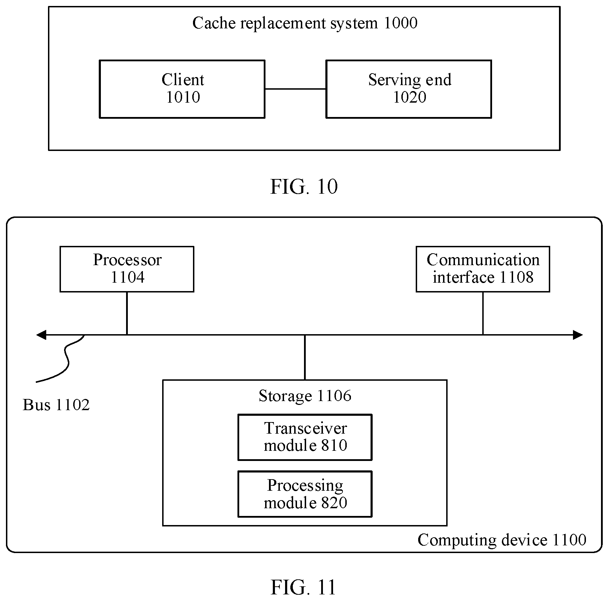

In the steps shown in FIG. 2, the cache replacement method provided in this application needs to be completed through interaction between the compute node 110 and the memory node 120, and the compute node 110 usually communicates with a serving end of the memory node 120 by using a client. Therefore, this application further provides a cache replacement system 1000. As shown in FIG. 10, the cache replacement system 1000 includes a client 1010 and a serving end 1020.

The client 1010 is configured to send a first read operation request to a memory node, where the first read operation request is used for reading access information of a plurality of data objects from the memory node, and cache data stored in the memory node includes the plurality of data objects.

The serving end 1020 is configured to return the access information to the client based on the first read operation request.

The client 1010 is further configured to separately calculate popularities of the plurality of data objects based on the access information of the plurality of data objects by using a first cache replacement algorithm in a plurality of cache replacement algorithms.

The client 1010 is further configured to: when cache replacement needs to be performed on the cache data, send a cache replacement request to the memory node based on the popularities of the plurality of data objects, where the cache replacement request indicates to replace cold data in the plurality of data objects with a data object to be inserted into the memory node.

Both the client 1010 and the serving end 1020 may be implemented by using software, or may be implemented by using hardware. For example, the following describes an implementation of the client 1010. Similarly, for an implementation of the serving end 1020, refer to the implementation of the client 1010.

A module is used as an example of a software functional unit, and the client 1010 may include code run on a computing instance. The computing instance may be at least one of computing devices such as a physical host (computing device), a virtual machine, and a container. Further, there may be one or more computing devices. For example, the client 1010 may include code run on a plurality of hosts/virtual machines/containers. It should be noted that the plurality of hosts/virtual machines/containers configured to run the application may be distributed in a same region or may be distributed in different regions. The plurality of hosts/virtual machines/containers configured to run the code may be distributed in a same AZ or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same VPC or may be distributed on a plurality of VPCs. Generally, one VPC is provided in one region. A communication gateway needs to be set in each VPC for communication between two VPCs in a same region or between VPCs in different regions. Interconnection between VPCs is implemented through the communication gateway.

In this embodiment of this application, the client 1010 may be a software module configured to perform the steps performed by the compute node 110 in the cache replacement method shown in FIG. 2, or may be the cache replacement apparatus 800 shown in FIG. 8. A software module of the serving end 1200 configured to perform the steps performed by the memory node 120 in the cache replacement method shown in FIG. 2 may also be the cache replacement apparatus 900 shown in FIG. 9.

A module is used as an example of a hardware functional unit, and the client 1010 may include at least one computing device, for example, a server. Alternatively, the client 1010 may alternatively be a device implemented by using an ASIC, a PLD, or the like. The PLD may be implemented by a CPLD, an FPGA, GAL, or any combination thereof.

A plurality of computing devices included in the client 1010 may be distributed in a same region or may be distributed in different regions. The plurality of computing devices included in the client 1010 may be distributed in a same AZ or may be distributed in different AZs. Similarly, the plurality of computing devices included in the client 1010 may be distributed on a same VPC or may be distributed on a plurality of VPCs. The plurality of computing devices may be any combination of computing devices such as a server, an ASIC, a PLD, a CPLD, an FPGA, and GAL.

This application further provides a computing device 1100. As shown in FIG. 11, the computing device 1100 includes a bus 1102, a processor 1104, a storage 1106, and a communication interface 1108. The processor 1104, the storage 1106, and the communication interface 1108 communicate with each other via the bus 1102. The computing device 1100 may be a server or a terminal device. It should be understood that quantities of processors and storages in the computing device 1100 are not limited in this application.

The bus 1102 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one line is for representing the bus in FIG. 11, but this does not mean that there is only one bus or only one type of bus. The bus 1102 may include a channel for transferring information between various components (for example, the storage 1106, the processor 1104, and the communication interface 1108) of the computing device 1100.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 1106 stores executable program code, and the processor 1104 executes the executable program code to respectively implement functions of the modules included in the cache replacement apparatus 800 or the cache replacement apparatus 900, so as to implement the foregoing cache replacement method. That is, the storage 1106 stores instructions used for executing the foregoing cache replacement method.

Alternatively, the storage 1106 stores executable code, and the processor 1104 executes the executable code to separately implement functions of the client 1010 or the serving end 1020, so as to implement the foregoing cache replacement method. That is, the storage 1106 stores instructions used for executing the foregoing cache replacement method.

The communication interface 1108 uses a transceiver module, for example, but not limited to, a network interface card or a transceiver, to implement communication between the computing device 1100 and another device or a communication network.

Considering that the cache replacement method provided in this application is applied to the foregoing distributed system 100, respective infrastructures such as the compute node 110 and the memory node 120 in the distributed system 100 usually include a plurality of computing devices. Therefore, this application further provides a computing device cluster. The computing device cluster includes at least one computing device. The computing device may be a server, such as a central server, an edge server, or a local server in a local data center. In some embodiments, the computing device may alternatively be a terminal device, such as a desktop computer, a notebook computer, or a smartphone.

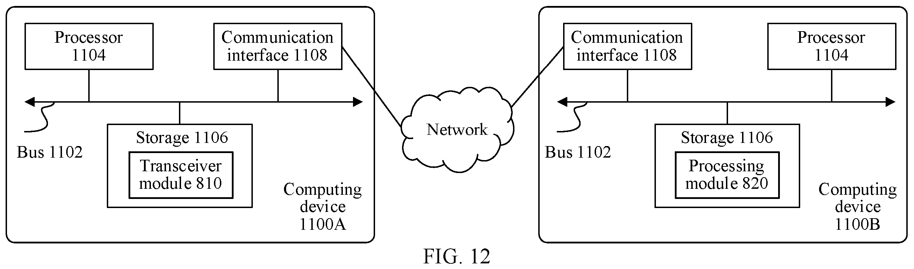

As shown in FIG. 12, the computing device cluster includes at least one computing device 1100. Storages 1106 in one or more computing devices 1100 in the computing device cluster may store same instructions used for performing the cache replacement method.

In some possible implementation, the storages 1106 in the one or more computing devices 1100 in the computing device cluster may separately store a part of the instructions used for performing the cache replacement method. In other words, a combination of the one or more computing devices 1100 may jointly execute the instructions used for performing the cache replacement method.

It should be noted that the storages 1106 in different computing devices 1100 in the computing device cluster may store different instructions, separately used for performing a part of functions of the cache replacement apparatus 800 or the cache replacement apparatus 900. That is, instructions stored in storages 1106 in different computing devices 1100 may implement functions of one or more modules included in the cache replacement apparatus 800 or the cache replacement apparatus 900.

In some possible implementations, the one or more computing devices in the computing device cluster may be connected via a network. The network may be a wide area network, a local area network, or the like. FIG. 8 shows a possible implementation. As shown in FIG. 12, two computing devices 1100A and 1100B are connected via a network. Specifically, communication interfaces in the computing devices are connected to the network. In this possible implementation, the storage 1106 in the computing device 1100A stores an instruction for performing a function of one or more modules of the transceiver module 810 and the processing module 820. In FIG. 12, an example in which the storage 1106 in the computing device 1100A stores an instruction for performing a function of the transceiver module 810 is used. In addition, the storage 1106 in the computing device 1100B stores an instruction for performing a function of one or more of the transceiver module 810 and the processing module 820. In FIG. 8, an example in which the storage 1106 in the computing device 1100B stores an instruction for performing a function of the processing module 820 is used.

It should be understood that functions of the computing device 1100A shown in FIG. 12 may alternatively be completed by a plurality of computing devices 1100. Similarly, functions of the computing device 1100B may also be completed by a plurality of computing devices 1100.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the cache replacement method shown in FIG. 2, or the steps performed by the compute node 110 or the memory node 120 in the cache replacement method shown in FIG. 2.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instructs the computing device to perform the cache replacement method shown in FIG. 2 or steps performed by the compute node 110 or the memory node 120 in the cache replacement method shown in FIG. 2.

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded or executed on a computer, the procedures or functions according to embodiments of this application are entirely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside the scope of this application.

It may be clearly understood by a person skilled in the art that, for the purpose of convenient and brief description, for a detailed working procedure of the foregoing system, apparatus, and unit, refer to a corresponding procedure in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. A computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash disk, a removable hard disk drive, a read-only memory, a random access memory, a magnetic disk, or an optical disc.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent a, b, c, a and b, a and c, b and c, or a and b and c, where a, b, and c may be singular or plural.

It should be noted that in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, the terms such as "example" or "for example" are intended to present related concepts in a specific manner.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions recorded in the foregoing embodiments or equivalent replacements may be made to some technical features thereof, without departing from the protection scope of the technical solutions of embodiments of the present invention.

## Claims

1. A cache replacement method, applied to a compute node in a distributed system of a disaggregated memory architecture, wherein the distributed system further comprises a memory node, the compute node bypasses a processor of the memory node when accessing cache data stored in the memory node, and the method comprises:

   sending a first read operation request to the memory node, wherein the first read operation request is used for reading access information of a plurality of data objects from the memory node, and the cache data stored in the memory node comprises the plurality of data objects;
   separately calculating popularities of the plurality of data objects based on the access information of the plurality of data objects by using a first cache replacement algorithm in a plurality of cache replacement algorithms; and
   when cache replacement needs to be performed on the cache data, sending a cache replacement request to the memory node based on the popularities of the plurality of data objects, wherein the cache replacement request indicates to replace cold data in the plurality of data objects with a data object to be inserted into the memory node.

2. The method according to claim 1, wherein the memory node stores metadata of the cache data, the plurality of data objects comprise a first data object, the metadata comprises the access information, and the method further comprises:
   after performing data access on the first data object, sending, by the compute node, a metadata update request to the memory node, wherein the metadata update request indicates to update access information of the first data object.

3. The method according to claim 1 or 2, wherein the access information comprises a last access timestamp and a quantity of access times.

4. The method according to claim 3, wherein the metadata is stored in a hash table, the hash table comprises a plurality of hash slots, each hash slot is used for storing metadata of one data object, and each hash slot comprises a length field, a pointer field, a last access timestamp field, and a quantity of access times field; and
   the length field indicates a length of a data object to which metadata belongs, the pointer field indicates an address of the data object to which the metadata belongs in the memory node, the last access timestamp field indicates a moment at which the data object to which the metadata belongs is accessed last time, and the quantity of access times field indicates a quantity of times that the data object to which the metadata belongs is accessed.

5. The method according to claim 4, wherein the metadata update request comprises a first write operation request and a first atomic counting operation request;

   the first write operation request indicates to set a value of a last access timestamp field in metadata of the first data object to a timestamp at which the compute node initiates the data access; and
   the first atomic counting operation request indicates to increase a value of the quantity of access times field in the metadata of the first data object by 1.

6. The method according to any one of claims 1 to 5, wherein the cold data comprises a second data object, and after the sending the cache replacement request to the memory node based on the popularities of the plurality of data objects, the method further comprises:
   sending a historical record entry generation request to the memory node, wherein the historical record entry generation request indicates to convert metadata of the second data object into a historical record entry, and the historical record entry indicates a second cache replacement algorithm used when cache replacement is performed on the second data object.

7. The method according to claim 6, wherein the historical record entry is stored in the hash slot of the hash table, and the hash slot comprises a type field and an algorithm identifier field; and
   the type field indicates that cache replacement has been performed on the data object to which the historical record entry belongs, and the algorithm identifier field indicates the second cache replacement algorithm used when cache replacement is performed on the data object to which the historical record entry belongs.

8. The method according to claim 7, wherein the historical record entry generation request comprises an atomic swapping operation request and a second write operation request, the atomic swapping operation request indicates to modify a value of a length field in the metadata of the second data object to a value of the type field, and the second write operation request indicates to replace a value of a field that is in the metadata of the second data object and that is used for representing access information with a value used for representing the second cache replacement algorithm used when cache replacement is performed on the second data object.

9. The method according to claim 8, wherein the method further comprises:

   when access to the second data object stored in the memory node is a miss, determining that the memory node stores the historical record entry of the second data object;
   sending a second read operation request to the memory node, wherein the second read operation request is used for reading the historical record entry of the second data object from the memory node, and a value of an algorithm identifier field of the historical record entry of the second data object indicates the second cache replacement algorithm; and
   reducing a weight of the second cache replacement algorithm.

10. The method according to claim 9, wherein the method further comprises:
    sending a third write operation request to the memory node, wherein the third write operation request indicates to write a reduced weight of the second cache replacement algorithm into the memory node, so that the memory node combines the reduced weight of the second cache replacement algorithm into the global algorithm weight, and returns the combined global algorithm weight to the compute node.

11. The method according to any one of claims 1 to 10, wherein the sending the cache replacement request to the memory node based on the popularities of the plurality of data objects comprises:
    when remaining storage space of the memory node is less than a size of the to-be-inserted data object, or remaining storage space of the memory node is less than a preset threshold, sending the cache replacement request to the memory node based on the popularities of the plurality of data objects.

12. A cache replacement method, applied to a compute node and a memory node that are in a distributed system of a disaggregated memory architecture, wherein the compute node bypasses a processor of the memory node when accessing cache data stored in the memory node, and the method comprises:

    sending, by the compute node, a first read operation request to the memory node, wherein the first read operation request is used for reading access information of a plurality of data objects from the memory node, and the cache data stored in the memory node comprises the plurality of data objects;
returning, by the memory node, the access information to the compute node based on the first read operation request;
calculating separately, by the compute node, popularities of the plurality of data objects based on the access information of the plurality of data objects by using a first cache replacement algorithm in a plurality of cache replacement algorithms; and
when the compute node needs to perform cache replacement on the cache data, sending, by the compute node, a cache replacement request to the memory node based on the popularities of the plurality of data objects, wherein the cache replacement request indicates to replace cold data in the plurality of data objects with a data object to be inserted into the memory node.

13. A cache replacement apparatus, comprising:

    a transceiver module, configured to send a first read operation request to a memory node, wherein the first read operation request is used for reading access information of a plurality of data objects from the memory node, and cache data stored in the memory node comprises the plurality of data objects; and
    a processing module, configured to separately calculate popularities of the plurality of data objects based on the access information of the plurality of data objects by using a first cache replacement algorithm in a plurality of cache replacement algorithms, wherein
    the transceiver module is further configured to: when cache replacement needs to be performed on the cache data, send a cache replacement request to the memory node based on the popularities of the plurality of data objects, wherein the cache replacement request indicates to replace cold data in the plurality of data objects with a data object to be inserted into the memory node.

14. A cache replacement system, comprising:

    a client, configured to send a first read operation request to a memory node, wherein the first read operation request is used for reading access information of a plurality of data objects from the memory node, and cache data stored in the memory node comprises the plurality of data objects; and
    a serving end, configured to return the access information to the client based on the first read operation request, wherein

the client is further configured to separately calculate popularities of the plurality of data objects based on the access information of the plurality of data objects by using a first cache replacement algorithm in a plurality of cache replacement algorithms; and

the client is further configured to: when cache replacement needs to be performed on the cache data, send a cache replacement request to the memory node based on the popularities of the plurality of data objects, wherein the cache replacement request indicates to replace cold data in the plurality of data objects with a data object to be inserted into the memory node.

15. A computing device cluster, comprising at least one computing device, wherein each computing device comprises a processor and a storage; and
the processor of the at least one computing device is configured to execute instructions stored in the storage of the at least one computing device, to cause the computing device cluster to perform the method according to any one of claims 1 to 11.

16. A computing device cluster, comprising at least one computing device, wherein each computing device comprises a processor and a storage; and
the processor of the at least one computing device is configured to execute instructions stored in the storage of the at least one computing device, to cause the computing device cluster to perform the method according to claim 12.

17. A computer program product comprising instructions, wherein when the instructions are run by a computing device cluster, the computing device cluster is caused to perform the method according to any one of claims 1 to 11.

18. A computer program product comprising instructions, wherein when the instructions are run by a computing device cluster, the computing device cluster is caused to perform the method according to claim 12.

19. A computer-readable storage medium, comprising computer program instructions, wherein when the computer program instructions are executed by a computing device cluster, the computing device cluster performs the method according to any one of claims 1 to 11.

20. A computer-readable storage medium, comprising computer program instructions, wherein when the computer program instructions are executed by a computing device cluster, the computing device cluster performs the method according to claim 12.

FIG. 1

EP 4 749 453 A1

**Compute node 110**

Cache replacement algorithm ... Cache replacement algorithm

First Cache replacement algorithm

**Step 220: Separately calculate popularities of the plurality of data objects based on the access information of the plurality of data objects by using the first cache replacement algorithm**

**Step 230: When cache replacement needs to be performed on cache data, send a cache replacement request based on the popularities of the plurality of data objects**

**Step 210: Send a first operation request**

Access information of a plurality of data objects

Cache replacement request

**Memory node 120**

Hash table (including access information)

The plurality of data objects

Replace cold data

FIG. 2

EP 4 749 453 A1

| Hash bucket 301 | Hash bucket 301 | Hash bucket 301 | ... | Hash bucket 301 |
|---|---|---|---|---|

| Hash slot 302 | Hash slot 302 | Hash slot 302 | Hash slot 302 |
|---|---|---|---|

| Object identifier field 303 | Length field 304 | Pointer field 305 | Hash value field 308 | Insertion timestamp field 309 | Last access timestamp field 306 | Quantity of access times field 307 |
|---|---|---|---|---|---|---|

←————— Atomic field ————→←————————— Metadata field ——————————→

FIG. 3

EP 4 749 453 A1

| Compute node 110 | Step 410: Third read operation request | Memory node 120 |
|---|---|---|

FIG. 4

| Object identifier field 501 | Type field 502 | Historical record entry identifier field 503 | Hash value field 504 | Algorithm identifier field 505 | Last access timestamp field 506 | Quantity of access times field 507 |
|---|---|---|---|---|---|---|

|← Atomic field →|← Metadata field →|

FIG. 5

FIG. 6

| Compute node 110 | Access a second data object | Memory node 120 |
|---|---|---|
| | | Hash table |
| | Miss | |
| **Step 710: Send a query operation request to the memory node 120** | Query a historical record entry of the second data object | Hash table |
| **Step 720: Send a second read operation request to the memory node 120** | Second read operation request | |
| | Historical record entry of the second data object | Hash table |
| **Step 730: Reduce a weight of a second cache replacement algorithm** | Third write operation request (including a reduced weight of the second cache replacement algorithm) | |
| **Step 740: Send a third write operation request to the memory node 120** | | Update a global algorithm weight |
| | **Step 750: Synchronize the global algorithm weight** | |

FIG. 7

Cache replacement apparatus 800

Transceiver module 810 — Processing module 820

FIG. 8

Cache replacement apparatus 900

Transceiver module 910

FIG. 9

Cache replacement system 1000

| Client 1010 | Serving end 1020 |

FIG. 10

Processor 1104

Communication interface 1108

Bus 1102

Storage 1106

Transceiver module 810

Processing module 820

Computing device 1100

FIG. 11

| Processor 1104 | | Communication interface 1108 |
|---|---|---|

Bus 1102

| Storage 1106 |
|---|
| Transceiver module 810 |

Computing device 1100A

Network

| Communication interface 1108 | | Processor 1104 |
|---|---|---|

Bus 1102

| Storage 1106 |
|---|
| Processing module 820 |

Computing device 1100B

FIG. 12

## INTERNATIONAL SEARCH REPORT

| International application No. |
| --- |
| **PCT/CN2024/079913** |

**A.    CLASSIFICATION OF SUBJECT MATTER**

G06F9/50(2006.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS: VEN: CNTXT; USTXT; WOTXT; EPTXT; ENTXT; CNKI; IEEE: 分离, 节点, 绕过, 内存, 缓存, 替换, 逐出, 热数据, 访问, 读取, 次数, 频率, disaggregate, node, bypass, memory, cache, replace, evict, hot data, access, read, times, frequency

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 113220693 A (BEIJING BYTEDANCE NETWORK TECHNOLOGY CO., LTD.) 06 August 2021 (2021-08-06) <br> description, paragraphs 27-114 | 1-20 |
| Y | CN 113805789 A (HUAWEI TECHNOLOGIES CO., LTD.) 17 December 2021 (2021-12-17) <br> description, paragraphs 78-210 | 1-20 |
| Y | US 2022179780 A1 (MICROSOFT TECHNOLOGY LICENSING, LLC) 09 June 2022 (2022-06-09) <br> description, paragraphs 19-46 | 1-20 |
| A | CN 115495246 A (SHANGHAI JIAO TONG UNIVERSITY) 20 December 2022 (2022-12-20) <br> entire document | 1-20 |
| A | US 2022272049 A1 (ELECTRONICS AND TELECOMMUNICATIONS RESEARCH INSTITUTE) 25 August 2022 (2022-08-25) <br> entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 June 2024** | **10 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| International application No. |
| :--- |
| **PCT/CN2024/079913** |

| Patent document cited in search report | | | Publication date (day/month/year) | Patent family member(s) | | | Publication date (day/month/year) |
| :---: | :---: | :---: | :---: | :---: | :---: | :---: | :---: |
| CN | 113220693 | A | 06 August 2021 | CN | 113220693 | B | 20 October 2023 |
| | | | | WO | 2022252862 | A1 | 08 December 2022 |
| CN | 113805789 | A | 17 December 2021 | WO | 2021249141 | A1 | 16 December 2021 |
| | | | | EP | 4152163 | A1 | 22 March 2023 |
| | | | | US | 2023105067 | A1 | 06 April 2023 |
| US | 2022179780 | A1 | 09 June 2022 | EP | 4260189 | A1 | 18 October 2023 |
| | | | | US | 2022382672 | A1 | 01 December 2022 |
| | | | | WO | 2022125254 | A1 | 16 June 2022 |
| | | | | TW | 202316264 | A | 16 April 2023 |
| | | | | US | 11429518 | B2 | 30 August 2022 |
| | | | | CN | 116710886 | A | 05 September 2023 |
| CN | 115495246 | A | 20 December 2022 | | None | | |
| US | 2022272049 | A1 | 25 August 2022 | KR | 20220118756 | A | 26 August 2022 |

**EP 4 749 453 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311090908

- CN 202311196479